# EUROPÄISCHE PATENTANMELDUNG

(11) **EP 0 919 741 A1**
(43) Veröffentlichungstag der Anmeldung: **02.06.1999**
(21) Anmeldenummer: 98122623.6
(22) Anmeldetag: 27.11.1998
(51) Int. Cl.: F16D 25/08

(54) **Vorrichtung zum Einrücken und Ausrücken einer Mitnehmerkupplung**

(30) Priorität: 27.11.1997 NO 975474
(71) Anmelder: Kongsberg Automotive ASA, 3601 Kongsberg (NO)
(72) Erfinder: Sundkvist, Arild, 3600 Kongsberg (NO)
(74) Vertreter: Sajda, Wolf E., Dipl.-Phys.

(57) **Zusammenfassung**

Es wird eine Vorrichtung zum Einrücken und Ausrücken einer Mitnehmerkupplung für ein Fahrzeug angegeben, die eine Kupplungsbetätigungseinrichtung mit einem Arbeitszylinder (10) aufweist. Die Kupplung weist eine Feder (1) mit einem ersten Verbindungsorgan (5) auf. Beim Betätigen eines Kupplungspedals im Fahrzeug bewirkt der Arbeitszylinder (10) eine axiale Zugbewegung eines Ausrücklagers (30) mit einem zweiten Verbindungsorgan (35). Die Verbindungsorgane (5, 35) sind annähernd komplementär konusförmig ausgebildet, und das erste Verbindungsorgan (5) verläuft in radialer Richtung außerhalb des zweiten Verbindungsorganes (35). Zwischen den beiden Verbindungsorganen (5, 35) ist ein federnder Drahtring (45) vorgesehen, der an einer Stelle längs seines Umfanges getrennt ist und dessen Endbereiche (47, 48) an der Trennstelle (46) miteinander verbunden werden können. Der Drahtring (45) verhindert ein axiales Trennen der Verbindungsorgane (5, 35), wenn die Kupplungsbetätigungseinrichtung mit der Kupplung verbunden ist. Ein Federelement (41) versucht, die Verbindungsorgane (5, 35) gegeneinander zu bewegen. Ein Kolben (11) und der Zylinder (10) verlaufen koaxial zu einer Antriebswelle (8), die durch die Feder (1) und das Ausrücklager (30) hindurchgeht. An dem Kolben (11) ist ein Halteorgan (60) befestigt, das zum Reibungseingriff mit einem Teil des Zylinders (12) eingerichtet ist, wenn sich der Kolben (11) in seiner vordersten Stellung befindet. Dann ist die Reibungskraft so groß, daß der Kolben (11) in dieser Stellung festgehalten werden kann und ein Zusammendrücken des Federelementes (41) und ein Aufheben der Klemmwirkung des Drahtringes (45) zwischen den Oberflächenbereichen (7, 39) bewirkt werden kann.

## Beschreibung

Die Erfindung betrifft eine Vorrichtung zum Einrücken und Ausrücken einer Mitnehmerkupplung für ein Fahrzeug, die eine Kupplungsbetätigungseinrichtung mit einem Arbeitszylinder und einem Ausrücklager aufweist.

Eine Vorrichtung der eingangs genannten Art ist bekannt und wird beispielsweise von der Firma Valeo hergestellt, wobei eine Kupplungs-Servoeinrichtung an der Außenseite eines Getriebekastens oder eines Getriebes angeordnet ist. Die Anordnung ist so getroffen, daß ein Hebelarm, der mit einem Kolben verbunden ist und zum Bewegen des Ausrücklagers sich in den Getriebekasten hinein erstreckt, leicht zugänglich ist und in einfacher Weise ergriffen und in einer gewünschten Stellung festgehalten werden kann. Dies dient dem Zweck, die Klemmung eines dort vorhandenen Drahtringes aufzuheben oder zu beenden, damit dessen Endbereiche voneinander getrennt werden können und dadurch der Drahtring aus seiner Position zwischen entsprechenden Verbindungsorganen entfernt werden kann, wenn es erforderlich ist, den Getriebekasten von dem zugeordneten Motor zu trennen. Eine derartige Anordnung der Kupplungs-Servoeinrichtung ist allerdings aus produktionstechnischen Gründen nicht vorteilhaft, da die Vorrichtung relativ teuer ist und ein zusätzlicher Aufwand bei der Montage des Getriebekastens erforderlich ist.

Der Erfindung liegt daher die Aufgabe zugrunde, eine Vorrichtung der eingangs genannten Art anzugeben, die mit geringeren Kosten herstellbar ist und sich leichter montieren läßt als dies bei herkömmlichen Anordnungen der Fall ist.

Diese Aufgabe wird mit der erfindungsgemäßen Vorrichtung in zufriedenstellender Weise erreicht. Vorteilhafte Weiterbildungen der erfindungsgemäßen Vorrichtung sind in den Unteransprüchen angegeben.

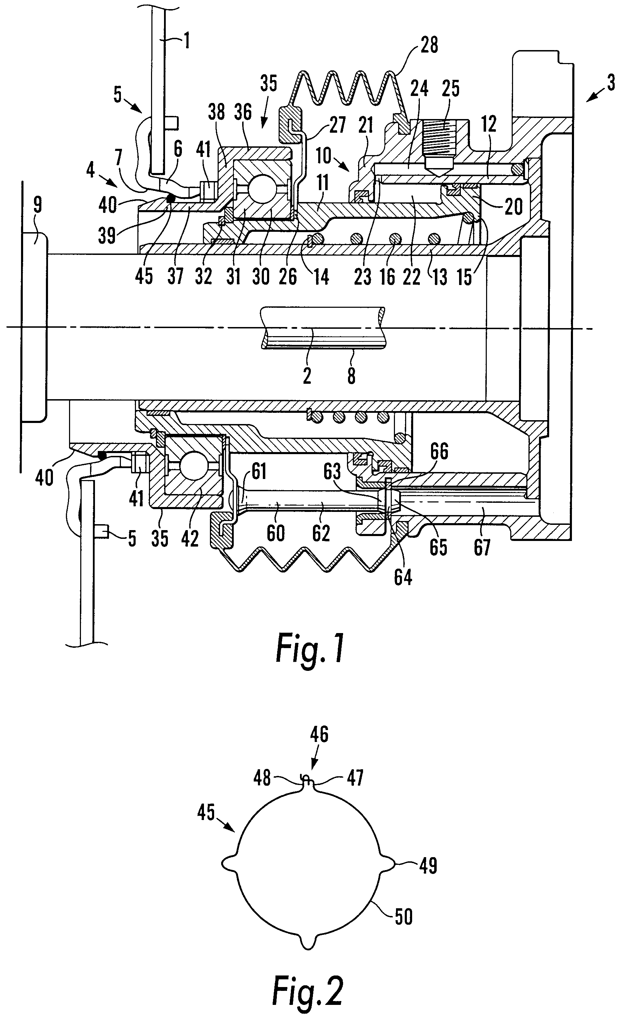

Die Erfindung wird nachstehend, auch hinsichtlich weiterer Merkmale und Vorteile, anhand der Beschreibung eines Ausführungsbeispiels und unter Bezugnahme auf die beiliegenden Zeichnungen näher erläutert. Die Zeichnungen zeigen in
- Fig. 1: einen Längsschnitt durch einen Teil eines Getriebekastens, eines Motors und einer Kupplung gemäß einer Ausführungsform der erfindungsgemäßen Vorrichtung, wobei Teile der Kupplung, des Motors und des Getriebekastens weggelassen sind und wobei der Teil des Getriebekastens, der sich über der Längsachse der Vorrichtung befindet, einen Kolben zeigt, der in einen zugehörigen Zylinder eingeführt ist, während der Teil, der sich unter der Längsachse befindet, den Kolben in einer Stellung zeigt, in der er in maximaler Weise aus dem Zylinder herausgeführt ist; und in
- Fig. 2: eine Draufsicht auf einen Drahtring zur Verwendung bei der Anordnung gemäß Fig. 1.

Wie sich aus Fig. 1 entnehmen läßt, weist die Kupplung eine Feder 1 auf, beispielsweise eine Ausrücktellerfeder, die quer zur Achse 2 der Vorrichtung verläuft, wobei die Achse 2 die Längsachse für eine Antriebswelle 8 eines Motors 9 sowie einen Getriebekasten 3 ist. Die Feder 1 ist in der Weise vorgespannt, daß ihr radial innerer Bereich sich in der Darstellung gemäß Fig. 1 in der Richtung nach links zu bewegen versucht, wobei diese Richtung nachstehend die Richtung nach vorn bezeichnet.

Die Feder 1 weist eine zentrale Aussparung 4 auf. Durch diese zentrale Aussparung 4 erstreckt sich eine Reihe von Mitnehmern oder ersten Verbindungsorganen 5, welche an der Feder 1 befestigt sind. Diese ersten Verbindungsorgane 5 weisen einen radial nach hinten, also bei der Darstellung gemäß Fig. 1 nach rechts verlaufenden inneren Bereich 6 auf, wobei ein radial innen gelegener Oberflächenbereich 7 der Mitnehmer oder der ersten Verbindungsorgane 5 im wesentlichen an einer nach hinten spitz zulaufenden Konusoberfläche und längs der Längsachse verlaufend angebracht ist.

An einigen Stellen, beispielsweise an vier Stellen längs des Umfanges der zentralen Aussparung 4 der Feder 1 ist bei dem vorliegenden Ausführungsbeispiel zwischen den benachbarten Mitnehmern 5 ein Zwischenraum vorgesehen, der zur Aufnahme von gekrümmten Bereichen 49 eines Drahtringes 45 dient, wie es nachstehend im einzelnen erläutert ist.

Ein Getriebekasten 3 weist einen Arbeitszylinder 10, der mit einem Druckfluid, z.B. einem Hydraulikfluid, betätigt werden kann, sowie einen Kolben 11 und einen Zylinder 12 auf. Der Kolben 11 ist rohrförmig ausgebildet und umschließt einen nach vorn vorstehenden Bereich 13 des Getriebekastens 3. Dieser Bereich 13 trägt einen Anschlagring 14; zwischen diesem Anschlagring 14 und einem radial nach innen verlaufenden Flansch 15 an dem hinteren Ende des Kolbens 11 ist eine Schraubendruckfeder 16 vorgesehen, die den Kolben 11 nach hinten, d.h. weiter in den Zylinder 12 hinein zu bewegen versucht.

Der hintere Endbereich des Kolbens 11 weist außerdem einen radial nach außen ragenden Flansch 20 auf, der zusammen mit dem radial nach innen vorstehenden Flansch 21 des Zylinders 12 einen Zylinderraum 22 begrenzt. Dieser Zylinderraum 22 steht mit einer nicht-dargestellten Druckfluidquelle sowie einer ebenfalls nicht-dargestellten Kupplungs-Servoeinrichtung über Kanäle oder Passagen 23, 24 und 25 in Verbindung.

Zwischen dem Kolben 11 und dem Zylinder 12 sind Dichtungen, beispielsweise Lippendichtungen vorgesehen, die in der Zeichnung nicht näher bezeichnet sind.

In einem Abstand von dem vorderen Ende des Kolbens 11 ist dieser auf seiner radial außen gelegenen Seite mit einem nach vorn weisenden Ansatz 26 versehen. Am vorderen Endbereich des Kolbens 11 ist eine an dem Ansatz 26 anliegende Platte 27 eingesetzt, welche ein vorderes Endteil eines Schutzbalges 28 tragt, der beispielsweise aus Gummi besteht. Ein hinteres Endteil dieses Schutzbalges 28 ist an dem Zylinder 12 befestigt.

Der vordere Kolbenbereich nimmt weiterhin ein Ausrücklager 30 auf, dessen innerer Laufring 31 mit seiner einen Seite an der Platte 27 anliegt, wobei dieser Laufring 31 außerdem axial mittels eines Halte- oder Sicherungsringes 32 festgehalten ist, der in einer in Umfangsrichtung verlaufenden Nut des Kolbens 11 angebracht ist.

Ein äußerer Laufring 42 des Ausrücklagers 30 ist von einem ersten zylindrischen Bereich 36 eines zweiten Verbindungsorganes 35 geführt, und ein zweiter, im wesentlichen zylindrischer Bereich 37 dieses Verbindungsorgans 35, dessen Durchmesser kleiner ist als der Durchmesser des ersten zylindrischen Bereiches 36, verläuft nach vorn von einem radial verlaufenden Bereich 38 aus, der die zylindrischen Bereiche 36 und 37 miteinander verbindet.

Das zweite Verbindungsorgan 35 weist in der Nähe des vorderen Endes des zweiten zylindrischen Bereiches 37 einen radial nach außen weisenden zweiten Oberflächenbereich 39 auf, der koaxial zu der Achse 2 verläuft und sich nach hinten verjüngt bzw. eine Fase besitzt, wobei sich dieser Oberflächenbereich 39 im wesentlichen entlang einer Konusoberfläche erstreckt und für das Zusammenwirken mit dem ersten Oberflächenbereich 7 ausgelegt ist.

Das vordere Ende des zweiten zylindrischen Bereiches 37 hat einen radial nach außen weisenden Oberflächenbereich 40, der als Teil einer Konusoberfläche ausgebildet ist und der koaxial mit der Achse 2 sowie in Richtung nach vorn konisch verläuft.

Vor dem radial verlaufenden Bereich 38 des zweiten Verbindungsorganes 35 ist ein Federelement 41 vorgesehen, das als Ring ausgebildet ist, der in seiner Umfangsrichtung wellenförmig verläuft. Dieses Federelement 41 ist dazu ausgelegt, gegen das hintere Ende des radial innen gelegenen Bereiches 6 des ersten Verbindungsorganes 5 in Anlage zu kommen und von diesem in radialer Richtung gegen den radialen Bereich 38 gedrückt zu werden, wobei es dabei leicht federnd zusammengedrückt werden kann.

Der vordere Endbereich des zweiten Verbindungsorganes 35 ist in axialer Richtung in den kreisförmigen Raum eingeführt, welcher von den radial innen gelegenen Bereichen der ersten Verbindungsorgane 5 begrenzt ist, wobei der jeweilige zweite Oberflächenbereich 39 und der erste Oberflächenbereich 7 einander gegenüberliegen und sich in radialer Richtung überlappen, wobei zugleich ein gegenseitiger radialer Abstand vorhanden ist. Zwischen diesen Oberflächenbereichen 7 und 39 ist der Drahtring 45 angeordnet, der längs seines Umfanges an einer Trennstelle 46 aufgetrennt ist, wie es schematisch in Fig. 2 angedeutet ist.

Wie sich der Darstellung in Fig. 2 entnehmen läßt, sind Endbereiche 47 und 48 des Drahtringes 45 an der Trennstelle 46 mit Hakenteilen ausgestattet, die ineinander gehakt werden können, so daß der Ringdurchmesser des Drahtringes 45 nur wenig geändert werden kann. Wenn aber die Endbereiche 47 und 48 nicht ineinander gehakt sind, dann ist der Drahtring 45 leicht expandierbar oder komprimierbar.

Des weiteren weist der Drahtring 45, wie in Fig. 2 schematisch angedeutet, eine Reihe von gebogenen Bereichen oder Krümmungen 49 auf, die von seinen kreisförmigen Bereichen 50 radial nach außen vorstehen und die dazu ausgelegt sind, in die Zwischenräume zwischen den Mitnehmern oder den ersten Verbindungsorganen 5 hineinzuragen.

Für den Drahtring 45 und die benachbarten ersten und zweiten Oberflächenbereiche 7 und 39 gilt folgendes:

Wenn die Endbereiche des Drahtringes 45 nicht miteinander verbunden oder ineinander eingehakt sind, so daß für den Drahtring 45 kein Expansionshindernis besteht, dann ist der Innendurchmesser des Drahtringes 45 größer als der größte Durchmesser des konusförmigen Oberflächenbereiches 39 des zweiten Verbindungsorganges 35.

Wenn aber die Endbereiche 47 und 48 des Drahtringes 45 miteinander verbunden sind und der Drahtring 45 geschlossen ist, dann ist der Innendurchmesser des Drahtringes 45 kleiner als der größte Durchmesser des konusförmigen Oberflächenbereiches 39 des zweiten Verbindungsorganes 35, und der Außendurchmesser des Drahtringes 45 ist größer als der kleinste Durchmesser des konusförmigen Oberflächenbereiches 7 des ersten Verbindungsorganes 5. Das bedeutet, daß der Drahtring 45 zwischen den Oberflächenbereichen 7 und 39 eingeklemmt wird, wenn man versucht, das Ausrücklager 30 nach hinten zu bewegen, um die Kupplung auszurücken.

Wie aus dem unteren Teil der Zeichnung in Fig. 1 ersichtlich (also unterhalb der Längsachse 2 dargestellt), ist ein vorderer Endbereich 61 eines Halteorganes, das beispielsweise als Zapfen 60 ausgebildet ist, an der Platte 27 befestigt. Ein zylindrischer Mittelbereich 62 des Zapfens 60 verläuft vorstehend oder auskragend nach hinten parallel zu der Achse 2; dabei ist ein hinterer Endbereich des Zapfens 60 verbreitert ausgebildet und weist ein erstes Kopfteil 63 auf, welches als Kegelstumpf ausgebildet ist, der in Richtung nach vorn sich verjüngend verläuft. Dieses Kopfteil 63 ist mit einem Kopfteil 64 in Form eines Reibungsteiles verbunden, das seinerseits mit einem dritten Kopfteil 65 verbunden ist, welches als Kegelstumpf ausgebildet und nach hinten, d.h. zu dem freien Ende des Zapfens 60 hin, sich verjüngend verläuft.

In dem Zylinder 12 ist eine durchgehende Bohrung 67 vorgesehen, deren Durchmesser etwas größer als der Durchmesser des zweiten Kopfteiles 64 ist und die koaxial mit dem Zapfen 60 verläuft, wobei die Bohrung 67 eine Öffnung aufweist, die dem Zapfen 60 zugewandt ist. In der Nähe dieser Öffnung ist in der Bohrung 67 eine in Umfangsrichtung verlaufende Nut vorgesehen, in der ein Reibungsorgan angeordnet ist.

Das Reibungsorgan ist beispielsweise als Federring 66 ausgebildet, dessen Durchmesser bei einer Federung erweitert werden kann und der im unbelasteten Zustand einen Durchmesser besitzt, der etwas kleiner ist als der Durchmesser des zweiten Kopfteiles 64, jedoch größer ist als der Durchmesser des Mittelbereiches 62.

Geht man davon aus, daß das Getriebe mit der Kupplung oder dem Motor 9 nicht in Verbindung steht, so funktioniert die vorstehend beschriebene Vorrichtung folgendermaßen:

Zunächst wird der Drahtring 45 etwa koaxial in die zentrale Aussparung 4 der Feder 1 eingesetzt, wobei die Endbereiche 47 und 48 sowie die gebogenen Bereiche 49 des Drahtringes 45 dazu gebracht werden, daß sie zwischen den benachbarten Mitnehmern oder ersten Verbindungsorganen 5 verlaufen; dadurch wird der Drahtring 45 im wesentlichen daran gehindert, sich in axialer Richtung relativ zu der Kupplung zu bewegen. Die kreisförmigen Bereiche 50 des Drahtringes 45 können dabei gegen den inneren Bereich 6 der ersten Verbindungsorgane 5 zur Anlage kommen.

Danach wird der Kolben 11 in seine vorderste Stellung relativ zu dem Zylinder 12 gebracht, wobei zuerst das erste konische Kopfteil 63 und anschließend das zweite zylindrische Kopfteil 64 des Zapfens 60 in den Federring 66 hineingeführt werden, so daß dieser sich erweitert und einer axialen Kolbenbewegung wegen der Reibung zwischen dem Zapfen 60 und dem Federring 66 entgegenwirkt.

Anschließend wird der zweite zylindrische Bereich 37 des zweiten Verbindungsorganes 35 in die zentrale Aussparung 4 der Feder 1 und dabei auch in den Drahtring 45 eingeführt, der relativ zu der Kupplung in axialer Richtung festgehalten wird. Da die Endbereiche 47 und 48 des Drahtringes 45 nicht miteinander verbunden worden sind, kann dieser gegebenenfalls bei der Einführung des vorderen konusförmigen Oberflächenbereiches 40, der zur gleichen Zeit den Drahtring 45 in eine koaxiale Positionierung bringt, expandiert werden.

Wenn der Drahtring 45 sich außerhalb des zweiten konusförmigen Oberflächenbereiches 39 des zweiten Verbindungsorganes 35 befindet und die Enden der Mitnehmer oder ersten Verbindungsorgane 35 zur Anlage gegen das Federelement 41 kommen und dieses zusammendrücken, dann werden die Endbereiche 47 und 48 des Drahtringes 45 ineinander gehakt; dadurch wird der Innendurchmesser des Drahtringes 45 reduziert, so daß sein innerer Durchmesser kleiner als der größte Durchmesser des konusförmigen Oberflächenbereiches 39 ist. Dabei wird der Drahtring 45 wesentlich weniger aufweitbar. Bei diesem Zusammenhaken wird der Drahtring 45 somit nicht von den Oberflächenbereichen 7 und 39 eingeklemmt.

Damit ist der Zusammenbau von dem Getriebekasten 3 und dem Motor 9 beendet.

Wenn ein Ausrücken der Kupplung erwünscht ist, dann wird ein Druckfluid in den Zylinderraum 22 eingeführt, und zwar durch ein Betätigen eines entsprechenden Kupplungspedals des Fahrzeugs, woraufhin der Kolben 11 nach hinten bewegt wird. Dabei wird das Ausrücklager 30 nach hinten gezogen und nimmt das zweite Verbindungsorgan 35 mit. Dadurch wird der Drahtring 45 zwischen den Oberflächenbereichen 7 und 39 eingeklemmt und überträgt die Ausrückkraft vom Kolben 11 auf die Feder 1 durch die Mitnehmer oder ersten Verbindungsorgane 5, wobei die Feder 1 ausgebogen wird.

Wenn ein Einrücken der Kupplung gewünscht ist, dann wird der Druck des Druckfluids reduziert, indem man das entsprechende Kupplungspedal losläßt; daraufhin genügt die Rückstellkraft der Feder 16, um den Kolben 11 nach vorn zu bewegen, bis die Kupplung eingerückt ist. Dabei wird der Federring 66 nur an dem eingeengten Mittelbereich 62 entlang durch den Zapfen 60 bewegt.

Wenn es gewünscht ist, den Getriebekasten 3 von dem Motor 9 zu trennen, dann werden die Endbereiche 47 und 48 des Drahtringes 45 voneinander getrennt. Dann wird der Getriebekasten 3 von dem Motor 9 gelöst und zusammen mit dem Zylinder 12 bei der Anordnung gemäß Fig. 1 nach rechts gezogen, bis sein vorderer Flansch 21 zur Anlage gegen den hinteren Flansch 20 des Kolbens 11 kommt.

Der Federring 66 wird dann zum Eingriff mit dem zylindrischen Kopfteil 64 des Kopfes des Zapfens 60 gebracht, so daß der Kolben 11 im Verhältnis zum Zylinder 12 festgehalten wird. Danach wird der Getriebekasten 3 bei der Anordnung gemäß Fig. 1 nach links bewegt und zur Anlage gegen den Motor 9 gebracht, wobei das wellenförmig ausgebildete Federelement 41 zusammengedrückt wird und der Drahtring 45 nicht gegen die Oberflächenbereiche 7 und 39 geklemmt wird; daraufhin können die Endbereiche 47 und 48 des Drahtringes 45 voneinander getrennt werden.

Daraufhin kann sich der Drahtring 45 ausdehnen, so daß sein Innendurchmesser größer wird als der vordere Teil des Oberflächenbereiches 39. Der Drahtring 45 verhindert somit keine nach hinten gerichtete axiale Bewegung des Kolbens 11, und der Getriebekasten 3 kann von der Kupplung weggezogen werden.

Von den oben erwähnten Kanälen oder Passagen 23, 24 und 25 ist vorzugsweise ein Kanal, beispielsweise der Kanal 23, im Verhältnis zu seinem benachbarten Kanal eingeengt oder mit einem Drosselteil versehen und bildet auf diese Weise eine Blende oder einen Drosselbereich, so daß Schwingungen im Druckfluid oder ein Pulsieren des Druckes des Druckfluids verhindert werden. Auf diese Weise wird ein derartiges Pulsieren reduziert und auch nur in geringfügigem Ausmaß auf ein Kupplungspedal in dem jeweiligen Fahrzeug übertragen.

Es ist besonders vorteilhaft, wenn die Querschnittsfläche des Drosselbereiches 1/2,5 der Querschnittsfläche des benachbarten Kanals ausmacht. Damit können Schwingungen in vorteilhafter Weise vermieden werden, wobei derartige Schwingungen beispielsweise von der Wellenform der Kupplungstellerfeder einer Feder verursacht werden können, weil eine derartige Wellenform eine axiale Bewegung des Kolbens 11 hervorrufen kann.

Im Zusammenhang mit den Mitnehmern oder den ersten Verbindungsorganen ist vorstehend angegeben, daß zwischen diesen ein Zwischenraum an vier Stellen für die Aufnahme von gebogenen Bereichen oder Krümmungen 49 des Drahtringes 45 vorhanden ist. Diese Maßnahme ist allerdings nicht einschränkend zu verstehen. Vielmehr können derartige Zwischenräume auch an mehr oder weniger als vier Stellen vorhanden sein; dies richtet sich nach der vorhandenen Anzahl von gebogenen Bereichen oder Krümmungen 49 an dem jeweiligen Drahtring 45, wobei diese Anzahl selbstverständlich in Abhängigkeit von den Gegebenheiten von vier abweichen kann.

## Patentansprüche

1. Vorrichtung zum Einrücken und Ausrücken einer Mitnehmerkupplung für ein Fahrzeug, mit einer Kupplungsbetätigungseinrichtung, die einen Arbeitszylinder (10) und ein Ausrücklager (30) aufweist,
wobei die Kupplung eine Feder (1) mit einem ersten Verbindungsorgan (5) und mit einem ersten Oberflächenbereich (7) aufweist und der Arbeitszylinder (10) beim Betätigen eines Kupplungspedals im Fahrzeug eine Zugbewegung des Ausrücklagers (30) mit einem zweiten Verbindungsorgan (35) mit einem zweiten Oberflächenbereich (39) in die Ausrückrichtung der Kupplung verursacht,
wobei eine Antriebswelle (8) durch die Feder (1) und das Ausrücklager (30) hindurch verläuft,
wobei die Oberflächenbereiche (7, 39) einander radial gegenüberliegen, koaxial zueinander verlaufen und annähernd konusförmige Oberflächenbereiche bilden, die koaxial mit der Antriebswelle (8) in der Ausrückrichtung spitz zulaufen und ein gegenseitiges radiales Spiel aufweisen, wenn ein Kolben (11) entgegen der Ausrückrichtung in maximaler Weise aus einem Zylinder (12) herausbewegt ist,
wobei das erste Verbindungsorgan (5) in radialer Richtung außerhalb des zweiten Verbindungsorganes (35) verläuft und zwischen diesen ein Drahtring (45) angeordnet ist, der an einer Trennstelle (46) entlang seines Umfanges getrennt ist und dessen Endbereiche (47, 48) an der Trennstelle (46) miteinander verbunden werden können,
und wobei ein Federelement (41) vorgesehen ist, welches das erste Verbindungsorgan (5) in axialer Richtung nach vorn, also gegen die Ausrückrichtung zu pressen versucht, so daß der Drahtring (45) zwischen den Oberflächenbereichen (7, 39) eingeklemmt wird, wenn er sich zwischen den Oberflächenbereichen (7, 39) befindet und seine Endbereiche (47, 48) miteinander verbunden sind,
dadurch gekennzeichnet,
daß an dem Kolben (11) ein Halteorgan (60) befestigt ist, das für einen Reibungseingriff mit einem Teil des Zylinders (12) ausgebildet ist, wenn sich der Kolben (11) in seiner vordersten Stellung befindet, wobei eine dadurch ausgeübte Reibungskraft so groß ist, daß der Kolben (11) in dieser Stellung gehalten wird und ein Zusammendrücken des Federelementes (41) und ein Aufheben der Klemmwirkung des Drahtringes (45) zwischen den Oberflächenbereichen (7, 39) zuläßt, wenn der Zylinder (12) entgegen der Ausrückrichtung geschoben wird.

2. Vorrichtung nach Anspruch 1,
dadurch gekennzeichnet,
daß das Halteorgan ein zylindrischer Zapfen (60) ist, der mit dem Kolben (11) verbunden ist und der in axialer Richtung in einer axialen Bohrung (67) des Zylinders (12) verläuft, wobei in der Bohrung (67) ein Reibungsorgan (66) vorgesehen ist, das für ein Zusammenwirken mit einem Reibungsteil (64) des Zapfens (60) ausgelegt ist.

3. Vorrichtung nach Anspruch 2,
dadurch gekennzeichnet,
daß das Reibungsorgan (66) ein in einer in Umfangsrichtung verlaufenden Nut der Bohrung (67) angeordneter Federring (66) ist und einen in die Bohrung (67) radial hineinragenden Bereich besitzt,
daß der Reibungsbereich ein am freien Ende des Zapfens (60) ausgebildetes, erweitertes Kopfteil (64) ist, dessen Durchmesser größer ist als der Innendurchmesser des Federringes (66), wenn dieser unbelastet ist, und das in den Federring (66) eingeführt werden kann, kurz bevor der Kolben (11) seine vorderste Stellung erreicht, wobei der Durchmesser des übrigen Bereiches des Zapfens (60) kleiner ist als der Innendurchmesser des Federringes (66), wenn dieser unbelastet ist.

4. Vorrichtung nach einem der vorhergehenden Ansprüche,
dadurch gekennzeichnet,
daß in einem Hydraulikkanal (23, 24, 25), durch den einem Zylinderraum (22) des Zylinders (11) ein Hydraulikfluid zuführbar ist, eine Drosseleinrichtung (23) vorgesehen ist.

5. Vorrichtung nach Anspruch 4,
dadurch gekennzeichnet,
daß das Verhältnis zwischen den Querschnittsflächen der Drosseleinrichtung (23) und einem benachbarten Kanalbereich ungefähr 1/2,5 beträgt.

6. Vorrichtung nach einem der vorhergehenden Ansprüche,
dadurch gekennzeichnet,
daß der Kolben (11) und der Zylinder (12) koaxial mit der Antriebswelle (8) und deren Achse (2) verlaufen.
